(19) Europäisches Patentamt
European Patent Office
Office européen des brevets

(11) **EP 1 165 688 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(51) Int Cl.:
*C08L 63/00* (2006.01)  *C08K 3/22* (2006.01)
*H01B 3/40* (2006.01)

(21) Anmeldenummer: **00918765.9**

(22) Anmeldetag: **06.03.2000**

(86) Internationale Anmeldenummer:
**PCT/EP2000/001954**

(87) Internationale Veröffentlichungsnummer:
**WO 2000/055254 (21.09.2000 Gazette 2000/38)**

(54) **HÄRTBARE ZUSAMMENSETZUNG MIT BESONDERER EIGENSCHAFTSKOMBINATION**

HARDENABLE COMPOSITION WITH A PARTICULAR COMBINATION OF CHARACTERISTICS

COMPOSITION DURCISSABLE AVEC COMBINAISON PARTICULIERE DE PROPRIETES

(84) Benannte Vertragsstaaten:
**CH DE ES FR GB IT LI**

(30) Priorität: **16.03.1999 CH 48599**

(43) Veröffentlichungstag der Anmeldung:
**02.01.2002 Patentblatt 2002/01**

(73) Patentinhaber: **Huntsman Advanced Materials (Switzerland) GmbH**
**4057 Basel (CH)**

(72) Erfinder: **BEISELE, Christian**
**D-79424 Auggen (DE)**

(74) Vertreter: **Baruh, Colette et al**
**Huntsman (Europe) BVBA,**
**Intellectual Property Department**
**Everslaan 45**
**3078 Everberg (BE)**

(56) Entgegenhaltungen:
**EP-A- 0 578 613      EP-A- 0 717 073**
**EP-A- 0 780 436      DE-A- 3 239 872**
**FR-A- 2 630 578**

• **DATABASE WPI Week 9724 Derwent Publications Ltd., London, GB; AN 1997-269477 XP002142700 & JP 09 097729 A (HITACHI CHEM CO LTD), 8. April 1997 (1997-04-08)**
• **DATABASE WPI Section Ch, Week 197936 Derwent Publications Ltd., London, GB; Class A21, AN 1979-65422B XP002142894 & JP 54 094559 A (HITACHI CHEM CO LTD), 26. Juli 1979 (1979-07-26)**

**Beschreibung**

Die vorliegende Erfindung betrifft härtbare Zusammensetzungen, deren Verwendung, beispielsweise als Giessharze zur Herstellung von Trockentransformatoren und anderen elektrischen Bauteilen, sowie die vernetzten durch Härtung der Zusammensetzungen erhältlichen Produkte, die sich dadurch auszeichnen, dass sie gleichzeitig die Merkmale gute Flammhemmung, hohe mechanische Festigkeit sowie geringe dielektrische Verluste bei hohen Betriebstemperaturen aufweisen.

Trockentransformatoren (Spannungsbereich bis zu ca. 40 kV) sind mit einer Wicklung versehen, deren Ummantelung aus einem elektrisch isolierenden Kunstharz besteht. Ausser zur Isolierung sollte der Kunstharzmantel auch zur mechanischen Festigkeit der Wicklungen beitragen, sowie flammhemmende Eigenschaften aufweisen.

Die kritischen Faktoren für ein Ummantelungsharz für Hochleistungstransformatoren sind der Sauerstoffindex für die Brennbarkeit, die Temperatur bei der der dielektrische Verlustfaktor tan δ 25% bei 50 Hz beträgt und der erzielte Rissindexwert als Mass für die Temperaturwechselbeständigkeit.

Flammhemmende Giessharze für den Verguss von Trockentransformatoren sind wohlbekannt und basieren im allgemeinen auf Bisphenol-A-Epoxidharzen, verstärkenden Füllstoffen und Flammschutzmitteln. So werden in US-A 3,202,947 flammhemmende Zusammensetzungen für Trockentransformatoren beschrieben, enthaltend flüssige Bisphenol-A-diglycidylether, Hexahydrophthalsäure, hydratisiertes Aluminiumoxid und Tris-(chloralkyl)phosphate.

Cycloaliphatische Harzsysteme sind ebenfalls bekannt. In US-A 4,009,141 werden elektrisch isolierende härtbare Zusammensetzungen beschrieben, bestehend aus ausgewählten cycloaliphatischen Epoxidharzen und Dicarbonsäureanhydriden, welche mit hohen Füllgraden von Zirkoniumsilikaten verstärkt sind und als zusätzlichen zweiten Füllstoff feinverteiltes hydratisiertes Aluminiumoxid enthalten. Sie eignen sich zur umhüllenden Isolierung elektrischer Bauteile, wie z.B. von metallischen Umspannerbauteilen, bzw. Transformator-Durchführungen ("transformer bushings").

Härtbare, flammhemmende, Zusammensetzungen für Trockentransformatoren sind auch in FR 2 630 578 B1 beschrieben. Diese enthalten wenigstens 20 Gew.-% vorbehandeltes Aluminiumhydroxid bezogen auf die Gesamtzusammensetzung bestehend aus Harz, Härter und verstärkenden Zusätzen. Vorbehandelt heisst in diesem Zusammenhang, dass durch Wärmebehandlung dem Aluminiumhydroxid etwa 0,5 bis 10 Gew.-% an Wasser entzogen wird, bezogen auf das ursprüngliche Gewicht vor dem Wasserentzug.

Da bei diesen Systemen der dielektrische Verlustfaktor tan δ bei höherer Temperatur stark zunimmt, sind diese Systeme nicht für Transformatoren mit hohen Betriebstemperaturen geeignet.

Es besteht daher ein Bedarf an Giessharzformulierungen, die gleichzeitig die Merkmale Flammhemmung, niedrige dielektrische Verluste und gute mechanische Eigenschaften, insbesondere ein gutes Rissverhalten aufweisen.

Dieses Problem konnte nun dadurch gelöst werden, indem man Core/Shell Polymere enthaltende cycloaliphatische Systeme verwendet, wie sie in der EP 0 578 613 A2 beschrieben werden. Es wurde gefunden, dass durch den Zusatz von bestimmten Füllstoffen in bestimmten Verhältnissen und bestimmten Anteilen Vergussmassen erhalten werden, die sich sowohl durch eine geringe Sprödigkeit als auch einen niedrigen tan δ - Wert und ausserdem guter Flammhemmung auszeichnen.

Gegenstand der vorliegenden Erfindung sind daher härtbare Zusammensetzungen enthaltend

(a) ein bei RT flüssiges cycloaliphatisches Epoxidharz und ein darin suspendiertes Core/Shell-Polymer,
(b) ein Polycarbonsäureanhydrid und
(c) Füllstoffe,

dadurch gekennzeichnet, dass die Zusammensetzung flammhemmend ist dadurch, dass zwei unterschiedliche Füllstoffe (c1) und (c2) enthalten sind, wobei der Füllstoff (c1) so beschaffen ist, dass er bei, ausgehend von RT, ansteigender Temperatur Wasser freisetzen kann, der Mengenanteil der Füllstoffe (c1) und (c2) insgesamt von 58 bis 73 Gew.-%, bezogen auf die Gesamtmenge der Komponenten (a), (b), (c1) und (c2), beträgt, und das Gewichtsverhältnis der Füllstoffe (c1) zu (c2) von 1 zu 3 bis 1 zu 1 beträgt.

Bei den erfindungsgemässen Zusammensetzungen handelt es sich um mittel- bis höherviskose Harzsysteme, die durch Wärme ausgehärtet werden können. Im gehärteten Zustand handelt es sich um duroplastische Materialien von relativ hoher Steifigkeit mit einer Glasumwandlungstemperatur von etwa 80 bis 140°C.

Der Begriff "cycloaliphatisches Epoxidharz" steht im Rahmen dieser Erfindung für sämtliche Epoxidharze mit cycloaliphatischen Struktureinheiten, d.h. er umfasst sowohl cycloaliphatische Glycidylverbindungen und β-Methylglycidylverbindungen als auch Epoxidharze auf Basis von Cycloalkylenoxiden. Unter bei "Raumtemperatur (RT) flüssig" werden bei 25°C flüssige, respektive nieder- bis mittelviskose (Viskosität kleiner etwa 20000 m Pa • s), giessfähige Verbindungen verstanden.

Geeignete cycloaliphatische Glycidylverbindungen und β-Methylglycidylverbindungen sind die Glycidylester und β-Methylglycidylester von cycloaliphatischen Polycarbonsäuren wie Tetrahydrophthalsäure, 4-Methyltetrahydrophthalsäure, Hexahydrophthalsäure, 3-Methylhexahydrophthalsäure und 4-Methylhexahydrophthalsäure.

Weitere geeignete cycloaliphatische Epoxidharze sind die Diglycidylether und β-Methylglycidylether von cycloaliphatischen Alkoholen, wie 1,2-Dihydroxycyclohexan, 1,3-Dihydroxycyclohexan und 1,4-Dihydroxycyclohexan, 1,4-Cyclohexandimethanol, 1,1-Bis(hydroxymethyl)cyclohex-3-en, Bis(4-hydroxycyclohexyl)methan, - 2,2-Bis(4-hydroxycyclohexyl)propan und Bis(4-hydroxycyclohexyl)sulfon.

Beispiele für Epoxidharze mit Cycloalkylenoxid-Strukturen sind Bis(2,3-epoxycyclopentyl)ether, 2,3-Epoxycyclopentylglycidylether, 1,2-Bis(2,3-epoxycyclopentyl)ethan, Vinylcyclohexendioxid, 3,4-Epoxycyclohexylmethyl-3',4'-epoxycyclohexancarboxylat, 3,4-Epoxy-6-methylcyclohexylmethyl-3',4'-epoxy-6'-methylcyclohexancarboxylat, Bis(3,4-epoxycyclohexylmethyl)adipat und Bis(3,4-epoxy-6-methylcyclohexylmethyl)adipat.

Bevorzugte cycloaliphatische Epoxidharze sind Bis(4-hydroxycyclohexyl)methandiglycidylether, 2,2-Bis(4-hydroxycyclohexyl)propandiglycidylether, Tetrahydrophthalsäurediglycidylester, 4-Methyltetrahydrophthalsäurediglycidylester, 4-Methylhexahydrophthalsäurediglycidylester, 3,4-Epoxycyclohexylmethyl-3'4'-epoxycyclohexancarboxylat und insbesondere Hexahydrophthalsäurediglycidylester.

Die cycloaliphatischen Epoxidharze können auch in Kombination mit aliphatischen Epoxidharzen verwendet werden. Als "aliphatische Epoxidharze" lassen sich Epoxidierungsprodukte von ungesättigten Fettsäureestern einsetzen. Vorzugsweise werden epoxidhaltige Verbindungen eingesetzt, die sich von Mono- und Polyfettsäuren mit 12 bis 22 C-Atomen und einer Iodzahl zwischen 30 und 400 ableiten, wie zum Beispiel Lauroleinsäure, Myristoleinsäure, Palmitoleinsäure, Ölsäure, Gadoleinsäure, Erukasäure, Ricinolsäure, Linolsäure, Linolensäure, Elaidinsäure, Likansäure, Arachidonsäure und Clupanodonsäure. Geeignet sind beispielsweise die Epoxidierungsprodukte von Sojaöl, Leinöl, Perillaöl, Tungöl, Oiticiaöl, Safloröl, Mohnöl, Hanföl, Baumwollsamenöl, Sonnenblumenöl, Rapsöl, mehrfach ungesättigte Triglyceride, Triglyceride aus Euphorbia-Gewächsen, Erdnussöl, Olivenöl, Olivenkernöl, Mandelöl, Kapoköl, Haselnussöl, Aprikosenkernöl, Bucheckernöl, Lupinenöl, Maisöl, Sesamöl, Traubenkernöl, Lallemantiaöl, Ricinusöl, Heringöl, Sardinenöl, Menhadenöl, Walöl, Tallöl und davon abgeleitete Derivate.

Weiterhin sind auch höher ungesättigte Derivate geeignet, die durch nachträgliche Dehydrierungsreaktionen dieser Öle erhalten werden können.

Die olefinischen Doppelbindungen der ungesättigten Fettsäurereste der oben angegebenen Verbindungen lassen sich nach bekannten Methoden epoxidieren, beispielsweise durch Reaktion mit Wasserstoffperoxid, gegebenenfalls in Gegenwart eines Katalysators, einem Alkylhydroperoxid oder einer Persäure, wie zum Beispiel Perameisensäure oder Peressigsäure.

Im Rahmen der Erfindung können sowohl die vollständig epoxidierten Öle als auch die partiell epoxidierten Derivate, die noch freie Doppelbindungen enthalten, für die Komponente (a) verwendet werden.

Bevorzugt werden epoxidiertes Sojaöl und epoxidiertes Leinöl verwendet.

Werden cycloaliphatische Epoxidharze in Kombination mit aliphatischen Epoxidharzen eingesetzt, so beträgt das zweckmässige Gewichtsverhältnis von cycloaliphatischer zu aliphatischer Komponente zwischen 1 zu 0 und 0,6 zu 0,4.

Die erfindungsgemäss eingesetzten cycloaliphatischen Epoxidharze enthalten in suspendierter Form als Zähigkeitsvermittler sogenannte Core/Shell-Polymere. Dabei können die Zähigkeitsvermittler im Ausgangszustand flüssig oder fest sein. Sie dürfen keine reaktiven Gruppen aufweisen, die mit den Epoxidgruppen des jeweiligen Epoxidharzes reagieren könnten. Vorzugsweise verwendet man feste Zähigkeitsvermittler. Diese bieten den Vorteil, dass die Teilchengrösse wie auch der Anteil der zähigkeitsvermittelnden Phase in der Suspension vorgegeben sind. Bei den flüssigen Zähigkeitsvermittlern wird die erforderliche zweite Phase hingegen während der Härtung mit dem Epoxidharz gebildet.

Core/Shell Polymere haben in der Regel einen weichen Kern (Core) aus einem elastomeren Material, der im Epoxidharz unlöslich ist. Darauf aufgepropft ist eine Schale (Shell) aus polymerem Material, die keine mit dem Epoxidharz reaktionsfähigen Gruppen aufweist.

Beispiele für Elastomere, die als Core-Material eingesetzt werden können, sind Polybutadien, Polyacrylsäure- und Polymethacrylsäureester sowie deren Co- oder Terpolymere mit Polystyrol, Polyacrylnitril oder Polysulfid.

Beispiele für polymere Shell-Materialien sind Polystyrol, Polyacrylnitril, Polyacrylat- und - methacrylathomo-, -di- oder -terpolymere oder Styrol/Acrylnitril/Glycidylmethacrylat-Terpolymere.

Bevorzugt sind Suspensionen enthaltend ein festes Core/Shell-Polymer.

Die Grösse solcher Core/Shell-Partikel beträgt zweckmässig 0,05 bis 30 μm, vorzugsweise 0,05 bis 15 μm. Insbesondere gelangen Core/Shell-Partikel mit einer Grösse von kleiner als 1 μm zur Anwendung.

Die Core/Shell-Polymere lassen sich z.B. nach der in der US-A 4,419,496 oder der EP-A 0 045 357 beschriebenen Weise herstellen.

Insbesondere bevorzugt werden Core/Shell-Polymere eingesetzt, die einen Kern aus Polybutadien oder Polybutadien/Polystyrol enthalten. Dieses Core-Material ist vorzugsweise nur teilweise vernetzt. Weitere Core-Materialien sind Polyacrylate und -methacrylate, insbesondere Polyacrylsäure- und Polymethacrylsäureester sowie deren Di- oder Terpolymere.

Die Schale besteht besonders bevorzugt aus Polymeren auf der Basis von Methylmethacrylat, Methacrylsäurecyclohexylester, Acrylsäurebutylester, Styrol und Methacrylnitril, insbesondere aber auf der Basis von Polymethylmethacrylat. Die Menge an Zähigkeitsvermittler in den erfindungsgemässen, ein cycloaliphatisches oder aliphatisches Epoxidharz enthaltenden Suspensionen beträgt vorzugsweise 1 bis 30 Gew.-%, insbesondere bis 5 bis 10 Gew.-%, bezogen auf das Epoxidharz.

Zur Härtung der erfindungsgemässen Zusammensetzungen werden Polycarbonsäureanhydride verwendet.

Dabei kann es sich um lineare aliphatische polymere Anhydride, wie beispielsweise Polysebacinsäurepolyanhydrid oder Polyazelainsäurepolyanhydrid, oder cyclische Carbonsäureanhydride handeln.

Cyclische Carbonsäureanhydride sind besonders bevorzugt.

Beispiele für cyclische Carbonsäureanhydride sind:

Bernsteinsäureanhydrid, Citraconsäureanhydrid, Itaconsäureanhydrid, alkenyl-substituierte Bernsteinsäureanhydride, Dodecenylbernsteinsäureanhydrid, Maleinsäureanhydrid und Tricarballylsäureanhydrid, Maleinsäureanhydridaddukt an Cyclopentadien oder Methylcyclopentadien, Linolsäureaddukt an Maleinsäureanhydrid, alkylierte Endoalkylentetrahydrophthalsäureanhydride, Methyltetrahydrophthalsäureanhydrid und Tetrahydrophthalsäureanhydrid, wobei von den beiden letzteren die Isomerengemische besonders geeignet sind. Besonders bevorzugt sind Hexahydrophthalsäureanhydrid und Methylhexahydrophthalsäureanhydrid.

Die erfindungsgemässen Zusammensetzungen können gegebenenfalls zusätzlich einen Härtungsbeschleuniger enthalten. Geeignete Beschleuniger sind dem Fachmann bekannt. Als Beispiele seien genannt:

Komplexe von Aminen, besonders tertiären Aminen, mit Bortrichlorid oder Bortrifluorid; tertiäre Amine, wie Benzyldimethylamin;

Harnstoffderivate, wie N-4-Chlorphenyl-N',N'-dimethylharnstoff (Monuron);
gegebenenfalls substituierte Imidazole, wie Imidazol oder 2-Phenylimidazol.

Bevorzugte Beschleuniger sind tertiäre Amine, insbesondere Benzyldimethylamin, und Imidazole (z.B. 1-Methylimidazol) für die o.g. Zusammensetzungen, die epoxidierte Öle enthalten.

Die Härtungsmittel und ggf. Beschleuniger werden in den üblichen wirksamen, d.h. für die Härtung der erfindungsgemässen Zusammensetzungen ausreichenden Mengen eingesetzt. Das Verhältnis der Komponenten Harzsystem/Härter/Beschleuniger hängt von der Art der verwendeten Verbindungen, der erforderlichen Härtungsgeschwindigkeit und von den im Endprodukt gewünschten Eigenschaften ab und kann vom Fachmann leicht ermittelt werden. Im allgemeinen werden 0,4 bis 1,6, vorzugsweise 0,8 bis 1,2 Äquivalente Anhydridgruppen pro Epoxidäquivalent eingesetzt.

Die Härtungsbeschleuniger werden normalerweise in Mengen von 0,1 bis 20 Gewichtsteilen pro 100 Gewichtsteile Epoxidharz eingesetzt.

Als Komponente c1 enthalten die erfindungsgemässen Zusammensetzungen Füllstoffe mit flammhemmenden Eigenschaften. Flammhemmende Eigenschaften weisen diese dadurch auf, das sie so beschaffen sind, das sie bei, ausgehend von Raumtemperatur, ansteigender Temperatur Wasser freisetzen können. Daher sind beispielsweise Aluminiumhydroxid, wasserhaltige Magnesia oder Zinkborat oder andere Stoffe, die sich bei erhöhten Temperaturen unter Freisetzung von Wasser zersetzen, geeignet.

Bevorzugt wird Aluminiumhydroxid verwendet. Dabei kann es sich sowohl um unbehandeltes als auch thermisch vorbehandeltes und/oder silanisiertes $Al(OH)_3$ handeln. Thermisch vorbehandelt heisst in diesem Zusammenhang, dass durch Wärmebehandlung dem Aluminiumhydroxid zweckmässig etwa 0,5 bis etwa 10 Gew.-% an Wasser entzogen wird, bezogen auf das ursprüngliche Gewicht vor dem Wasserentzug. Verfahren hierzu werden in FR 2 630 578 B1 beschrieben.

Um die gewünschte mechanische Festigkeit zu erzielen, wird das Ausgangsharz aktiv verstärkt durch die Zugabe eines weiteren, von c1 verschiedenen Füllstoffs c2. Als Verstärkungsmaterialien c2 eignen sich beispielsweise Glas- oder Kohlenstofffasern. Als Komponente c2 kommen weiterhin beispielsweise die folgenden in Betracht: Metallpulver, Holzmehl, Glaspulver, Glaskugeln, Halbmetall- und Metalloxide, wie zum Beispiel $SiO_2$ (Quarzsand, Quarzmehl, silanisiertes Quarzmehl, Quarzgutmehl, silanisiertes Quarzgutmehl), Aluminiumoxid, Titanoxid und Zirkoniumoxid, Halbmetall- und Metallnitride, wie zum Beispiel Siliziumnitrid, Bornitride und Aluminiumnitrid, Halbmetall- und Metallcarbide (SiC und Borcarbide), Metallcarbonate (Dolomit, Kreide, $CaCO_3$), Metallsulfate (Baryt, Gips), Gesteinsmehle und natürliche oder synthetische Mineralien hauptsächlich aus der Silikatreihe, wie zum Beispiel Zeolithe (insbesondere Molekularsiebe), Talkum, Glimmer, Kaolin, Wollastonit, silanisiertes Wollastonit und andere.

Bevorzugte Füllstoffe c2 sind Quarzmehl, silanisiertes Quarzmehl, Wollastonit und silanisiertes Wollastonit, sowohl einzeln als auch in Kombination.

Wollastonit ist ein natürlich vorkommendes Calciumsilikat der Formel $Ca_3[Si_3O_9]$ von nadelförmiger Gestalt mit Partikelgrössen im Micronbereich. Auch der künstlich hergestellte Wollastonit weist nadelförmige Gestalt auf. Wollastonit ist im Handel erhältlich, beispielsweise unter der Bezeichnung Nyad® der Firma Nyco.

Der Mengenanteil in Gew.-% der Komponenten (c1) und (c2) beträgt insgesamt von 58 bis 73, bevorzugt von 63 bis 68 Gew.-%, bezogen auf die Gesamtmenge der Komponenten (a), (b), (c1) und (c2), und das Gewichtsverhältnis der Füllstoffe (c1) zu (c2) beträgt von 1 zu 3 bis 1 zu 1, bevorzugt von 1 zu 2,3 bis 1 zu 2.

Gegebenenfalls kann auch zusätzlich zu den Füllstoffen c1 und c2 ein Netz- und Dispergiermittel verwendet werden, das die hauptsächlich elektrostatischen interaktiven Kräfte zwischen Harz und Füllstoff und die dadurch verursachte erhöhte Viskosität reduziert.

Das Netz- und Dispergiermittel wird zweckmässig in einer Menge von etwa 0,1 bis 2,0 Gew.%, bezogen auf die Gesamtmenge der Komponenten (a) und (b), eingesetzt.

Neben den oben erwähnten Füllstoffen c1 und c2 und ggf. einem Netz- und Dispergiermittel können die härtbaren Gemische weitere übliche Zusatzstoffe enthalten, wie z.B. Antioxidantien, Lichtschutzmittel, kristallwasserhaltige Füllstoffe, Weichmacher, Farbstoffe, Pigmente, Fungizide, Thixotropiemittel, Entschäumer, Antistatika, Gleitmittel, Antiabsetzmittel, Benetzungsmittel und Entformungshilfsmittel.

Die erfindungsgemässen Zusammensetzungen können nach bekannten Methoden mit Hilfe bekannter Mischaggregate, wie beispielsweise Rührer, Kneter und Walzen, hergestellt werden.

Die Härtung der erfindungsgemässen Gemische kann auf bekannte Art und Weise ein-, zwei- oder mehrstufig vorgenommen werden. Sie erfolgt im allgemeinen durch Erhitzen auf Temperaturen zwischen 60 °C und 200 °C, insbesondere zwischen 80 °C und 180 °C. Wird in zwei oder mehr Stufen gehärtet, bedeutet dies, dass in Intervallen mit jeweils ansteigender Temperatur gehärtet wird.

Gegenstand der Erfindung sind daher weiterhin vernetzte Produkte, erhältlich durch Härtung einer erfindungsgemässen Zusammensetzung.

Beispiele

Nachfolgend werden die Herstellung, Zusammensetzung und Prüfungsergebnisse von vier Referenz- und drei Erfindungsbeispielen angeführt. Für die jeweiligen Mengenangaben siehe auch Tabelle 1. Es wird jeweils eine Harzvormischung und eine Härtervormischung hergestellt. Die beiden Mischungen werden dann zur Gesamtmischung vereinigt und damit jeweils Prüfkörper vergossen, ausgehärtet und vermessen. Die allgemeinen Schritte im einzelnen:

Harzvormischung:

Für die jeweilige Harzvormischung werden die Komponenten gemeinsam in ein Mischgefäss gegeben und während einer Stunde bei einem Druck von 1 mbar und einer Temperatur von 50 °C innig vermischt.

Härtervormischung:

Ebenso werden für die jeweilige Härtervormischung die Komponenten gemeinsam in ein Mischgefäss gegeben und während einer Stunde bei einem Druck von 1 mbar und einer Temperatur von 50 °C innig vermischt.

Gesamtvormischung:

Für die Herstellung der jeweilige Gesamtmischung werden die jeweilige Harz- und Härtervormischung während 20 min bei einem Druck von 1 mbar und einer Temperatur von 50 °C innig vermischt.

Härtung / Prüfkörper:

Zur Herstellung der Prüfkörper werden die jeweiligen Gesamtmischungen in eine auf 100 °C vorgewärmte Metallform gefüllt und anschliessend während zunächst 2 Stunden bei 100 °C und nachfolgend 10 Stunden bei 140 °C ausgehärtet. An den so hergestellten Prüfkörpern werden die in der Tabelle 1 angegeben Messwerte festgestellt.

Die nachfolgend aufgeführten Harze und Härter, die für die Beispiele verwendet werden, stammen alle von der Ciba Spezialitätenchemie:

Harze (Angaben: E = Epoxidgehalt in Äquivalenten/kg, V = Viskosität in m Pa•s)

1 = Flüssiges cycloaliphatisches Epoxidharz auf Basis Hexahydrophthalsäurediglycidylester; E: 5,8 - 6,1 ; V: 700 - 1000

2 = Flüssige Mischung aus 90 Gew.-% Bisphenol-A-Epoxidharz und Polyoxypropylenglycol-diglycidylether; E: 4,9 - 5,4 ; V: 4200 - 5700

3 = Bisphenol-A-Epoxidharz ; E: 5,1 - 5,3 ; V: 8500 - 15000

4 = Flüssiges cycloaliphatisches Epoxidharz wie Harz 1 jedoch mit 10%-igem Core/Shell Anteil auf Basis Metacrylsäuremethylester und Polybutadienlatex (1:1); E: 5,2 - 5,5 ; V: 3500 - 5000

Härter

1 = Hexahydrophthalsäureanhydrid

2 = Amin-beschleunigte Härterformulierung auf Basis (Methylhexahydrophthalsäureanhydrid / Hexahydrophthalsäureanhydrid / Methyltetrahydrophthalsäureanhydrid = 70 : 15 : 15 pbw), enthaltend 38 Gew.-% eines Halbesters aus Bernsteinsäure und Polyethylenglycol (400 g/mol)

3 = Beschleunigte Formulierung aus Methyltetrahydrophthalsäureanhydrid und 50 Gew.-% Halbester aus Tetrahydrophthalsäure und Polypropylenglycol (400 g/mol), mit einem Anhydrid-Äquivalent von 2,6 bis 3 Val/kg;

4 = Gemisch aus Hexahydrophthalsäureanhydrid und Methylhexahydrophthalsäureanhydrid (70/30 ppw)

Weitere eingesetzte Komponenten:

| | |
|---|---|
| Entschäumungsmittel: | "BYK® A 501" (Byk Chemie) |
| Dispergiermittel: | "BYK® W 9010" (Byk Chemie) |
| Kieselsäure: | "R 202" (Degussa) |
| Beschleuniger 1: | N,N-Dimethylbenzylamin |
| Beschleuniger 2: | 10 % Methylimidazol, 3,3 % NaOCH$_3$, 7,7 % CH$_3$OH, Rest: PPG 400 |
| Quarzmehl: | "W 12" (Quarzwerke Frechen) |
| Wollastonit: | Unbehandelter, natürlicher Wollastonit, K = mittlere Korngrösse (D$_{50}$-Wert) in µ: 13 - 20; Spezifische Oberfläche (BET): 1 - 1,4 m$^2$/g |
| Antiabsetzmittel: | "EXL 2300" (Rohm & Haas) |

Aluminiumhydroxide (ATH = Aluminiumtrihydroxid):
Angaben K = mittlere Korngrösse (D$_{50}$-Wert) in µ, G = Glühverlust in %

| ATH1: | wärmevorbehandelt, silanisiert; | K: | 14 - 18, G: 31,0 +/- 1 |
|---|---|---|---|
| ATH2: | unbehandelt, "Apyral 2E" (Nabaltec); | K: | 15 - 27; G: 34,5 +/- 1 |
| ATH4: | unbehandelt, "Apyral 4" (Nabaltec); | K: | 9 - 13; G: 34,5 +/- 1 |

A) Referenzbeispiele (nicht erfindungsgemäss)

A1) Beispiel für ein nicht flammgehemmtes cycloaliphatisches System

a) Harzvormischung (1 Füllstoff)
100 g Harz 1; 150 g Quarzmehl.
b) Härtervormischung (1 Füllstoff)
90 g Härter 1; 150 g Quarzmehl, 3 g Beschleuniger 2.
c) Gesamtmischung (Gesamtfüllgrad 61%)
250 g Harzvormischung; 243 g Härtervormischung.

A2) Beispiel für ein typisches flammgehemmtes System

a) Harzvormischung (2 Füllstoffe im Verhältnis 1 zu 4)
100 g Harz 2; 39 g Quarzmehl; 156 g ATH2.
b) Härtervormischung (2 Füllstoffe im Verhältnis 1 zu 4)
100 g Härter 2; 39 g Quarzmehl; 156 g ATH2.

c) Gesamtmischung (Gesamtfüllgrad 66%)
295 g Harzvormischung; 295 g Härtervormischung.

A3) Versuch für ein flammgehemmtes cycloaliphatisches System mit guten dielektrischen Eigenschaften durch Zugabe von Aluminiumhydroxid zum System A1

a) Harzvormischung (2 Füllstoffe im Verhältnis 1 zu 4)
100 g Harz 1; 30 g Quarzmehl; 120 g ATH2.
b) Härtervormischung (2 Füllstoffe im Verhältnis 1 zu 4)
90 g Härter 1; 30 g Quarzmehl; 120 g ATH2, 3 g Beschleuniger 2.
c) Gesamtmischung (Gesamtfüllgrad 61 %)
250 g Harzvormischung; 243 g Härtervormischung.

A4) Formulierung entsprechend FR 2 630 578 B1

a) Harzvormischung (2 Füllstoffe im Verhältnis 1 zu 3)
200 g Harz 3; 75 g Quarzmehl; 225 g ATH1.
b) Härtervormischung (2 Füllstoffe im Verhältnis 1 zu 3)
200 g Härter 3; 75 g Quarzmehl; 225 g ATH1.
c) Gesamtmischung (Gesamtfüllgrad 60%)
500 g Harzvormischung; 500 g Härtervormischung.

B) Erfindungsbeispiele

B1)

a) Harzvormischung (2 Füllstoffe im Verhältnis 2,33 zu 1)
175,8 g Harz 4; 261,5 g Quarzmehl; 112,1 g ATH1.
b) Härtervormischung (2 Füllstoffe im Verhältnis 2,33 zu 1)
140,9 g Härter 4; 2,55 g Dispergiermittel; 0,72 g Beschleuniger 1; 214,5 g Quarzmehl; 91,9 g ATH1.
c) Gesamtmischung (Gesamtfüllgrad 68%)
549,4 g Harzvormischung; 450,6 g Härtervormischung.

B2)

a) Harzvormischung (2 Füllstoffe im Verhältnis 1,86 zu 1)
400,9 g Harz 4; 1 g Entschäumer; 1 g Kieselsäure; 388,1 g Wollastonit; 209 g ATH1.
b) Härtervormischung (2 Füllstoffe im Verhältnis 1,86 zu 1)
320,6 g Härter 4; 5 g Dispergiermittel; 1,4 g Beschleuniger 1; 8 g EXL 2300;
2 g Kieselsäure; 432,9 g Wollastonit; 232 g ATH1.
c) Gesamtmischung (Gesamtfüllgrad 63%)
1000 g Harzvormischung, 1001,9 g Härtervormischung.

B3) Wie B1 jedoch unter Verwendung von ATH4 anstelle von ATH1

a) Harzvormischung (2 Füllstoffe im Verhältnis 2,33 zu 1)
175,8 g Harz 4; 261,5 g Quarzmehl; 112,1 g ATH4.
b) Härtervormischung (2 Füllstoffe im Verhältnis 2,33 zu 1)

140,9 g Härter 4; 2,55 g Dispergiermittel; 0,72 g Beschleuniger 1; 214,5 g Quarzmehl; 91,9g ATH4.
c) Gesamtmischung (Gesamtfüllgrad 68%)
549,4 g Harzvormischung; 450,6 g Härtervormischung.

Tabelle 1

| Referenz-/Erfindungsbeispiele | RB1 | RB2 | RB3 | RB4 | EB1 | EB2 | EB3 |
|---|---|---|---|---|---|---|---|
| Harz<br>Cycloaliphatisch<br>[g] | 1<br>ja<br>100 | 2<br>nein<br>100 | 1<br>ja<br>100 | 3<br>nein<br>200 | 4<br>ja<br>175,8 | 4<br>ja<br>400,9 | 4<br>ja<br>175,8 |
| Core/Shell im Harz | nein | nein | nein | nein | ja | ja | ja |
| Härter<br>[g] | 1<br>90 | 2<br>100 | 1<br>90 | 3<br>200 | 4<br>140,9 | 4<br>320,6 | 4<br>140,9 |
| **Füllstoffe [g]** | | | | | | | |
| Quarz (Q) oder Wollastonit (W) | Q<br>300 | Q<br>78 | Q<br>60 | Q<br>150 | Q<br>476 | W<br>821 | Q<br>476 |
| ATH1 | - | - | - | 450 | 204 | 441 | - |
| ATH2 | - | 254 | 240 | - | - | - | - |
| ATH4 | - | - | - | - | - | - | 204 |
| Anteil ATH am Füllstoff [%] | 0 | 80 | 80 | 75 | 30 | 35 | 30 |
| Gesamtfüllgrad [%] | 61,0 | 66,0 | 61,0 | 60,0 | 68,0 | 63,0 | 68,0 |
| **Messwerte** | | | | | | | |
| Tg (DSC) [°C] [1] | 105 | 60 | 112 | 63 | 102 | 102 | 107 |
| Dehnung (Zugversuch) [%][2] | 1,8 | 0,65 | 0,74 | 1,1 | 0,77 | 0,8 | 0,81 |
| $G_{1C}$ [J/m$^2$] [3] | 525 | 405 | 402 | 542 | 432 | 648 | 490 |
| CTE [10$^{-6}$/K] [4] | 40 | 40 | 38,4 | 41 | 36,9 | 33,9 | 33,8 |
| Temperatur für tan $\delta$=25% [°C] [5] | 155 | 105<br>(10%) | 135 | -100 | 167 | 163 | 175 |
| LOI (Oxygen Index) [%][6] | 25 | 40 | 37,9 | 29,9 | 30,4 | 30,1 | 31,3 |
| Riss Index [7] | - 43 | - 7 | + 5 | - 37 | - 26 | - 50 | - 34 |

Note:
[1] DSC (Differential Scanning Calorimetry) durchgeführt mit Gerät TA 4000 (Fa. Mettler)
[2] nach ISO R527
[3] Bruchenergie $G_{1C}$: Doppeltorsionsversuch
[4] CTE = Coeffizient of Thermal Expansion = Wärmeausdehnungskoeffizient, gemessen nach DIN 53752
[5] Elektrische Werte (tangens $\delta$) nach DIN 53483, Messfrequenz 50 Hz
[6] LOI nach ASTM D2863
[7] Siehe Erläuterungen im Text

Das Referenzbeispiel 1 steht für ein nicht flammgehemmtes cycloaliphatisches System. Für ein typisches flammgehemmtes System steht das Referenzbeispiel 2. Weiterhin steht das Referenzbeispiel 3 als den Versuch ein flammgehemmtes cycloaliphatisches System mit guten dielektrischen Eigenschaften durch Zugabe von Aluminiumhydroxid zum System des Referenzbeispiels 1 zu erhalten. Schliesslich steht das Referenzbeispiel 4 für eine Formulierung entsprechend FR 2 630 578 B1.
Der in Tabelle 1 aufgeführte Riss-Index ist eine Zusammenfassung mehrerer mechanischer Werte, welche alle Einfluss auf das Rissverhalten bei "Stress" durch Temperaturänderungen haben können, zu einer einzigen Grösse, eben dem sogenannten Riss-Index. Mit ihm wird ein objektiver Vergleich der mechanischen Qualitäten verschiedener Systeme leichter möglich.

Die folgenden qualitativen Aussagen für die Auswirkungen sich ändernder einzelner Parameter auf das Temperaturwechselverhalten lassen sich empirisch ableiten:

1. Je höher der $T_G$-Wert ist, desto schlechter ist das Temperaturwechselverhalten.
2. Je tiefer der $G_{1C}$-Wert ist, desto schlechter ist das Temperaturwechselverhalten.
3. Je tiefer der Dehnungswert ist, desto schlechter ist das Temperaturwechselverhalten.
4. Je höher der Ausdehnungskoeffizient (CTE) ist, desto schlechter ist das Temperaturwechselverhalten.

Hingegen lassen sich bei gleichzeitiger Änderung mehrerer Parameter qualitative Aussagen über das resultierende Temperaturwechselverhalten nicht mehr machen. Wenn beispielsweise sowohl der $T_G$-Wert als auch der $G_{1C}$-Wert steigen, der CTE-Wert hingegen abnimmt, dann ist eine Vorhersage über das zu erwartende Temperaturwechselverhalten nicht mehr möglich.

Statistische Auswertungen von Messwerten an einer Vielzahl verschiedenster Systeme haben bei Ciba Spezialitätenchemie zu einer anwendungstechnisch hilfreichen Formel für die Berechnung einer neuen Grösse geführt, dem sogenannten Riss-Index. Mit Hilfe dieser Grösse lassen sich nunmehr auch bei multiplen Änderungen noch Aussagen über das zu erwartende resultierende Temperaturwechselverhalten machen.

Die Formel lautet:

$$RI = -498.08 \cdot Z^{0,18480890} \cdot G^{0,194114601} \cdot (A-18)^{-0,391334273} \cdot T^{-0,158387791} + 224,25$$

Dabei bedeuten: RI = Riss-Index; Z = Zugdehnung in %; G = $G_{1C}$ in J/m²;
A = Ausdehnungskoeffizient in ppm/K und T = $T_G$ in °C

Dabei indiziert eine Abnahme des Riss-Index Wertes eine Verbesserung der zu erwarteten Temperaturwechselbeständigkeit. Der Riss-Index korreliert sehr gut mit der mittleren Riss-Temperatur in °C, welche in einem praktischen Riss-Test ermittelt werden kann. Diese Riss-Temperatur und damit auch der Riss-Index geben einen Anhaltspunkt, ab welcher Temperatur Rissbildungen (verursacht durch Stress bei Temperaturschwankungen und unterschiedlichen Ausdehnungskoeffizienten von Vergussmasse und metallischem Insert) zu erwarten sind. Trockentransformatoren, die nach Cenelec-Norm HD 464 einem Temperaturwechseltest unterzogen werden (der für die Klasse "C2" bei -25 °C beginnt), haben eine gute Chance, diesen Test zu bestehen, wenn das verwendete Vergusssystem einen Riss-Index unterhalb (des für diese Erfindung kritischen Wertes) von -25 aufweist. Je kleiner der Rissindex, umso weniger anfällig ist das System in der Praxis im Bezug auf Stress.

Die Tabelle 1 zeigt weiterhin die gemessenen LOI-Werte (nach ASTM D2863). Je höher der LOI-Wert, umso besser ist die Flammhemmung. Für ein System, das als ausreichend flammhemmend eingesetzt werden kann, sollte der gemessene LOI-Wert bei > 30 liegen.

Schliesslich werden in der Tabelle 1 die ermittelten Temperaturen angeführt, bei denen der dielektrische Verlustfaktor tan δ einen bestimmten Wert aufweist (hier 25%). Je höher die Temperatur ist, bei der der tan δ diesen Wert aufweist, desto besser ist das dielektrische Verhalten des Materials bei erhöhter Temperatur. Ziel der voliegenden Erfindung waren in Anbetracht der beabsichtigten Anwendungen Werte von deutlich > 150 °C zu erhalten.

Die erfindungsgemässen Zusammensetzungen zeichnen sich dadurch aus, dass sie gleichzeitig die Merkmale gute Flammhemmung, hohe mechanische Festigkeit sowie geringe dielektrische Verluste bei hohen Betriebstemperaturen aufweisen.

Sie eignen sich daher besonders als Giessharze insbesondere für Anwendungen in der Elektroindustrie, wie beispielsweise zum Imprägnieren von elektrischen Spulen und zur Herstellung von Trockentransformatoren, Durchführungen, Isolatoren, Schaltern, Sensoren, Wandlern und Kabelendverschlüssen.

Die Verwendung der erfindungsgemässen Zusammensetzungen als elektrisches Isolationsmaterial stellt auch einen weiteren Erfindungsgegenstand dar.

**Patentansprüche**

**1.** Härtbare Epoxidharzzusammensetzung enthaltend

(a) ein bei RT flüssiges cycloaliphatisches Epoxidharz und ein darin suspendiertes Core/Shell-Polymer,
(b) ein Polycarbonsäureanhydrid und

(c) Füllstoffe,

**dadurch gekennzeichnet, dass** die Zusammensetzung flammhemmend ist dadurch, dass zwei unterschiedliche Füllstoffe (c1) und (c2) enthalten sind, wobei der Füllstoff (c1) so beschaffen ist, dass er bei, ausgehend von RT, ansteigender Temperatur Wasser freisetzen kann, der Mengenanteil der Füllstoffe (c1) und (c2) insgesamt von 58 bis 73 Gew.-%, bezogen auf die Gesamtmenge der Komponenten (a), (b), (c1) und (c2), beträgt, und das Gewichtsverhältnis der Füllstoffe (c1) zu (c2) von 1 zu 3 bis 1 zu 1 beträgt.

2. Härtbare Zusammensetzung nach Anspruch 1, **dadurch gekennzeichnet, dass** der Mengenanteil der Füllstoffe (c1) und (c2) von 63 bis 68 Gew.-% und das Gewichtsverhältnis der Füllstoffe (c1) zu (c2) von 1 zu 2,3 bis 1 zu 2 beträgt.

3. Härtbare Zusammensetzung nach Anspruch 1 oder 2, enthaltend Hexahydrophthalsäurediglycidylester.

4. Härtbare Zusammensetzung nach einem der Ansprüche 1 bis 3, enthaltend einen festes Core/Shell-Polymer.

5. Härtbare Zusammensetzung nach einem der Ansprüche 1 bis 4, **dadurch gekennzeichnet, dass** als Komponente (c2) Quarzmehl, silanisiertes Quarzmehl, Wollastonit, silanisiertes Wollastonit enthalten ist.

6. Härtbare Zusammensetzung nach einem der Ansprüche 1 bis 5, **dadurch gekennzeichnet, dass** als Komponente (c1) unbehandeltes, thermisch vorbehandeltes und/oder silanisiertes Aluminiumhydroxid enthalten ist.

7. Vernetzte Produkte, dadurch erhältlich, dass eine Zusammensetzung gemäss einem der Ansprüche 1 bis 6 gehärtet wird.

8. Verwendung einer Zusammensetzung nach einem der Ansprüche 1 bis 6 als Giessharz, insbesondere zum Imprägnieren von elektrischen Spulen und zur Herstellung elektrischer Bauteile wie Trockentransformatoren, Durchführungen, Isolatoren, Schaltern, Sensoren, Wandlern und Kabelendverschlüssen.

**Claims**

1. Curable epoxy resin composition comprising

   (a) a cycloaliphatic epoxy resin liquid at RT and a core-shell polymer suspended therein,
   (b) a polycarboxylic anhydride and
   (c) fillers,

   **characterized in that** the composition is flame-retardant by virtue of the presence of two different fillers (c1) and (c2), the nature of the filler (c1) being such that at a temperature starting at RT and rising it can liberate water, the total quantitative proportion of the fillers (c1) and (c2) being from 58 to 73% by weight, based on the total amount of components (a), (b), (c1) and (c2), and the ratio by weight of the fillers (c1):(c2) being from 1:3 to 1:1.

2. Curable composition according to Claim 1, **characterized in that** the quantitative proportion of the fillers (c1) and (c2) is from 63 to 68% by weight and the ratio by weight of the fillers (c1):(c2) is from 1:2.3 to 1:2.

3. Curable composition according to Claim 1 or 2, comprising diglycidyl hexahydrophthalate.

4. Curable composition according to any of Claims 1 to 3, comprising a solid core-shell polymer.

5. Curable composition according to any of Claims 1 to 4, **characterized in that** the component (c2) present comprises powdered quartz, silanized powdered quartz, wollastonite, silanized wollastonite.

6. Curable composition according to any of Claims 1 to 5, **characterized in that** the component (c1) present comprises untreated, thermally pre-treated and/or silanized aluminium hydroxide.

7. Crosslinked products obtainable by curing a composition according to any of Claims 1 to 6.

8. Use of a composition according to any of Claims 1 to 6 as casting resin, in particular for the impregnation of electrical coils and for the production of electrical components, such as dry-type transformers, bushings, insulators, switches, sensors, transducers and cable terminations.

## Revendications

1. Composition de résine époxyde durcissable, contenant

 (a) une résine époxyde cycloaliphatique liquide à la température ambiante et un polymère noyau/enveloppe en suspension dans cette résine,
 (b) un anhydride d'acide polycarboxylique et
 (c) des charges,

 composition **caractérisée en ce qu'**elle est retardatrice de combustion par le fait que deux charges différentes (c1) et (c2) y sont contenues, la charge (c1) étant de nature telle qu'elle peut libérer de l'eau à une température croissant à partir de la température ambiante, la proportion quantitative des charges (c1) et (c2) s'élevant au total de 58 à 73 % en poids par rapport à la quantité totale des composants (a), (b), (c1) et (c2) et le rapport en poids de la charge (c1) à la charge (c2) s'élevant à une valeur de 1:3 à 1:1.

2. Composition durcissable suivant la revendication 1, **caractérisée en ce que** la proportion quantitative des charges (c1) et (c2) s'élève à une valeur de 63 à 68 % en poids et le rapport en poids de la charge (c1) à la charge (c2) s'élève à une valeur de 1:2,3 à 1:2.

3. Composition durcissable suivant la revendication 1 ou 2, contenant de l'ester de diglycidyle d'acide hexahydrophtalique.

4. Composition durcissable suivant l'une des revendications 1 à 3, contenant un polymère noyau/enveloppe solide.

5. Composition durcissable suivant l'une des revendications 1 à 4, **caractérisée en ce qu'**elle contient comme composant (c2) de la poudre de quartz, de la poudre de quartz silanisée, de la wollastonite, de la wollastonite silanisée.

6. Composition durcissable suivant l'une des revendications 1 à 5, **caractérisée en ce qu'**elle contient comme composant (c1) de l'hydroxyde d'aluminium non traité, prétraité thermiquement et/ou silanisé.

7. Produits réticulés, pouvant être obtenus par le durcissement d'une composition suivant l'une des revendications 1 à 6.

8. Utilisation d'une composition suivant l'une des revendications 1 à 6 comme résine de coulée, en particulier pour l'imprégnation de bobines électriques et pour la production d'éléments de construction de transformateurs à sec, de traversées, d'isolateurs, de commutateurs, de capteurs, de convertisseurs et de boîtes d'extrémités de câbles.